(19) Europäisches Patentamt
European Patent Office
Office européen des brevets

(11) **EP 1 674 243 B1**

(12) **EUROPEAN PATENT SPECIFICATION**

(45) Date of publication and mention
of the grant of the patent:
**20.08.2008 Bulletin 2008/34**

(51) Int Cl.:
***B29C 67/00*** *(2006.01)*

(21) Application number: **05112301.6**

(22) Date of filing: **16.12.2005**

(54) **Method for three dimensional model printing**

Verfahren zum dreidimensionalen Drucken eines Modelles

Procédé pour l'impression de modèles tridimensionnels

(84) Designated Contracting States:
**AT BE BG CH CY CZ DE DK EE ES FI FR GB GR HU IE IS IT LI LT LU LV MC NL PL PT RO SE SI SK TR**

(30) Priority: **27.12.2004 US 20194**

(43) Date of publication of application:
**28.06.2006 Bulletin 2006/26**

(73) Proprietor: **Objet Geometries Ltd.**
**76124 Rehovot (IL)**

(72) Inventors:
• **KRITCHMAN, Eliahu M.**
**69012, Tel Aviv (IL)**
• **GOTHAIT, Hanan**
**76230, Rehovot (IL)**

(74) Representative: **Harrison Goddard Foote**
**Belgrave Hall**
**Belgrave Street**
**Leeds**
**LS2 8DD (GB)**

(56) References cited:
**WO-A-01/53105**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## FIELD OF THE INVENTION

The present invention relates to three-dimensional (3-D) modeling in general and to a method for controlling the thickness of printed layers, in particular.

## BACKGROUND OF THE INVENTION

3-D printing is a process used for the building up of 3-D models or objects, which may be implemented by building parts of an object in layers. 3-D printing is relatively speedy and flexible allowing for the production of prototype parts and tooling, for example, directly from a CAD model or other data.

3-D printing may enable users or manufacturers to obtain full 3-D models of a proposed product before tooling, thereby possibly substantially reducing the cost of tooling, and leading to a better synchronization between design and manufacturing" A lower product cost and improved product quality may also be obtained.

Various systems have been developed for computerized 3-D printing. Known systems include a system which operates on the basis of stereo-lithography where a focused ultra-violet laser is scanned over the top of a bath of photopolymerizable liquid polymer plastic material. The surface of the bath is polymerized on contact with the laser creating a solid plastic layer at or just below the surface.

One system provides a technique for providing layered parts by depositing a layer of powder material and then depositing a binder material in selected regions to produce a layer of bonded powder material at selected regions. These steps are repeated for successive layers to form a desired component. Following air blow treatment, unbound powder is removed, leaving the fabricated part.

One system provides an apparatus and a method for 3-D model printing, including a dispenser which includes a printing head having a set of nozzles, for selectively dispensing interface material in layers, and curing apparatus for optionally curing each of the layers deposited. Generally, interface material may include the material or materials used to construct the object, including build material, which forms the object, and support material, which supports the object as it is being built. In one such system, the depth of each deposited layer may be controllable by selectively adjusting the output from each of the set of nozzles.

It is known from WO 01/53105 to provide a method in accordance with the preamble of claim 1 for three dimensional model printing in which a predetermined quantity of interface material is dispensed from at least one printing head to form at least one interface layer, the dispensed interface material is levelled to a predetermined height and then cured, and the steps of dispensing, levelling and curing are repeated. A roller can be used to monitor the height of the interface layers and to remove surplus material from a layer before curing.

## SUMMARY OF THE INVENTION

Some embodiments of the present invention providemethods for printing of three-dimensional models layer by layer and for controlling the thickness of the layers of interface material forming the 3-D models being printed.

According to an exemplary embodiment of the present invention, a method for printing of a three-dimensional model is provided that includes, for example, dispensing material from at least one printing head to form a layer of an object, and altering the thickness of the dispensed layer to a pre-determined value. The thickness may be altered by, for example, a roller. Since the roller may induce a shearing force and action on the dispensed layer, it may be referred to herein as a shear or shear cut roller. A wiper or scraper may be provided to remove material from the roller. The speed, direction and/or other aspects of the roller may be controlled.

The method may be carried out by an apparatus for three-dimensional printing of a three-dimensional model. The apparatus may include, for example, at least one printing head for dispensing interface material to form at least one layer of an object, hardening or curing apparatus to harden or cure the interface material, a process controller, and an object correcting apparatus, the object correcting apparatus including a roller adapted to alter the thickness of the dispensed material to a predetermined value. In some embodiments the roller may be heated and/or cooled.

In accordance with some embodiments of the present invention, a method is provided for printing of a three-dimensional model that include using an object correcting apparatus, the object correcting apparatus including a scraping mechanism to remove surplus material from the object correcting apparatus.

According to additional embodiments of the present invention, a method is provided for printing of a three-dimensional model that include using an object correcting apparatus, the object correcting apparatus including an apparatus stopping mechanism adapted to detect possible collisions of a part of the printing apparatus with material on the printing table or on any upper surface of the printing cell below the printing head and cease operation of the apparatus when an anticipated collision has been determined.

According to additional embodiments of the present invention, a method is provided for printing of a three-dimensional model that include using a curing apparatus to cure surplus material, possibly before removal of the material from the printing apparatus.

In accordance with some embodiments of the present invention, a method is provided for printing of a three-dimensional model that includes dispensing material from a printing head to form a layer of the object; and altering the thickness of the dispensed material to a predetermined value using an object correcting apparatus, the apparatus including a roller operative to make contact with the layer to remove surplus material from the layer, during relative movement between the roller and the object, by rotating in a direction such that the portion of the roller in contact with the object moves in an opposite or contrary direction to that of the movement of the object relative to the roller.

In one example the printing method includes rotating the roller at a selected speed. In one example the printing method includes rotating the roller in a selected direction.

In one example the printing method includes relatively moving the roller in an X direction along the surface of the dispensed material such that the linear speed of the surface of the roller is between 1 and 20 multiplied by the relative X movement between the printing apparatus and the object being built.

In one example the printing method includes heating the roller. In one example the printing method includes cooling the roller. In one example the printing method includes removing surplus material from the roller surface. In one example the printing method includes scraping off the surplus material from the roller surface using a scraping mechanism.

In one example the printing method includes transferring surplus material into a waste disposal apparatus. In one example the printing method includes hardening surplus material. In one example the roller has a porous surface. In one example the printing method includes impregnating the roller with a lubricating material.

In accordance with some embodiments of the present invention, the method may use a printing apparatus to enable printing of a three-dimensional object; and an object correcting apparatus adapted to alter the thickness of dispensed material to a pre-detennined value, the object correcting apparatus including a roller being adapted to travel in a first direction and rotate in a direction opposite or contrary to the first direction.

In one example the roller is adapted to be rotated at a selected speed. In one example the roller is adapted to be rotated in a selected direction.

In one example the roller is adapted to be passed over a surface of the object in a first direction while rotating the roller such that the portion of the roller in contact with the surface travels in a direction opposite or contrary to the first direction.

In one example the roller is adapted to remove surplus material from a layer of the object at a selected finishing level. In one example the printing apparatus includes a cleaning unit to remove surplus material from the roller.

In one example the cleaning unit includes an aluminum cylinder with an anodized outer surface. In one example the cleaning unit is selected from the group consisting of a blade, knife, roller, and brush. In one example the cleaning unit includes one or more tilted walls and a drainage mechanism.

In one example the roller is to rotate at a speed different from the speed the roller would rotate if it rolled naturally along the object surface. In one example the roller has a smooth operating surface. In one example the roller has a porous surface.

In one example the printing apparatus includes coupling the roller to a heating mechanism. In one example the printing apparatus includes coupling the roller to a cooling mechanism. In one example the printing apparatus includes a lubricating material. In one example the roller includes one or more abrasive materials.

In one example the printing apparatus includes a sensing apparatus to determine whether a layer of a printed object exceeds pre-determined dimensions. In one example the printing apparatus includes a sensing apparatus to determine whether a collision of the printing apparatus and the object being printed has occurred.

In one example the printing apparatus includes an acceleration sensor. In one example the printing apparatus includes an apparatus stopping mechanism to detect possible collisions in at least a part of the printing apparatus and to cease apparatus operation when a collision has been detected.

In accordance with some embodiments of the present invention, a method is provided for printing of a three-dimensional model that includes dispensing material from a printing head, and detecting a collision of the printing head with material protruding above the operating level of the roller.

In one example the printing method includes sensing a collision using an acceleration sensing device. In one example the printing method includes ceasing the printing head operation when a collision has been detected.

In accordance with some embodiments of the present invention. the method may use a printing head to dispense material to form a three dimensional object; a collision detecting mechanism to detect possible collisions of the printing head with the object; and a printing apparatus stopping mechanism, to cease apparatus operation upon detection of a collision.

In one example the printing apparatus includes a sensing mechanism to determine whether a layer of dispensed material exceeds pre-determined dimensions. In one example the sensing mechanism is selected from the group consisting of audio sensing devices, optical sensing device, and tactile sensing devices.

In accordance with some embodiments of the present invention, the method may use a print head; a leveling apparatus to remove surplus material; and a curing apparatus to cure surplus material.

In one example the print head dispenses build material to form object layers, the printer comprising a second curing apparatus to cure build material.

In accordance with some embodiments of the present invention, the method may use a print head to dispense material; a roller to remove surplus material from an object layer dispensed by the printing head; and a scraper to remove surplus material from the roller, the scraper including a guide oriented to direct material flowing along the scraper.

In one example the guide comprises a set of walls extending from the scraper surface. In one example the printing apparatus includes walls that are flexible. In one example the printing apparatus includes walls that are made of silicone rubber. In one example the printing apparatus includes a container to store removed material. In one example the roller is to level an object being printed.

In accordance with some embodiments of the present invention, the method may use a printing apparatus to enable printing of a three-dimensional object; and a roller including a cooling mechanism. In one example the printing apparatus includes a cooling jacket surrounding the roller, the cooling jacket including cooling liquid. In one example the printing apparatus includes radiator pipes and a cooling fan coupled to the roller.

In accordance with some embodiments of the present invention, a method is provided for printing of a three-dimensional model that includes dispensing material from a printing head to form a layer of the object; cooling a roller mechanism to be used to alter the thickness of the dispensed material; determining whether the layer exceeds a selected thickness threshold; and altering the dispensed material to a pre-determined value.

In one example the cooling is enabled using a cooling jacket coupled to a roller, the cooling jacket including cooling liquid. In one example the cooling is enabled using radiator pipes and a cooling fan.

In accordance with some embodiments of the present invention, the method may use a printing apparatus to enable printing of a 3 dimensional object; and an object correcting apparatus adapted to alter the thickness of dispensed material to a pre-determined value, the object correcting apparatus including a roller, the roller being adapted to cool at least an upper layer of the dispensed material.

In one example the printing apparatus includes a cooling jacket surrounding the roller, the cooling jacket including cooling liquid. In one example the printing apparatus includes radiator pipes and a cooling fan.

In accordance with some embodiments of the present invention, a method is provided for printing of a three-dimensional model that includes dispensing material from a printing head to form a layer of the object; cooling at least an upper layer of the dispensed material; determining whether the upper layer exceeds a selected thickness threshold; and altering the dispensed material to a pre-determined value.

In one example the cooling is enabled using a cooling jacket coupled to a roller, the cooling jacket including cooling liquid. In one example the cooling is enabled using radiator pipes and a cooling fan,

In accordance with some embodiments of the present invention, the method may use a printing apparatus to enable printing of a 3 dimensional object; and an object correcting apparatus adapted to alter the thickness of dispensed material to a pre-determined value, the object correcting apparatus including a pressure roller enabled to provide downward pressure on the dispensed material.

In one example the roller includes at least a metal core. In one example the roller includes at least a silicon rubber surface. In one example the printing apparatus includes a shear roller.

**BRIEF DESCRIPTION OF THE DRAWINGS**

The present invention will be understood and appreciated more fully from the following detailed description taken in conjunction with the appended drawings in which:

Fig. 1 is a schematic illustration of a 3-D printing apparatus, constructed and operative in accordance with an embodiment of the present invention;

Fig. 2A is a schematic view of an object correcting apparatus, usable with the printing apparatus of Fig. 1;

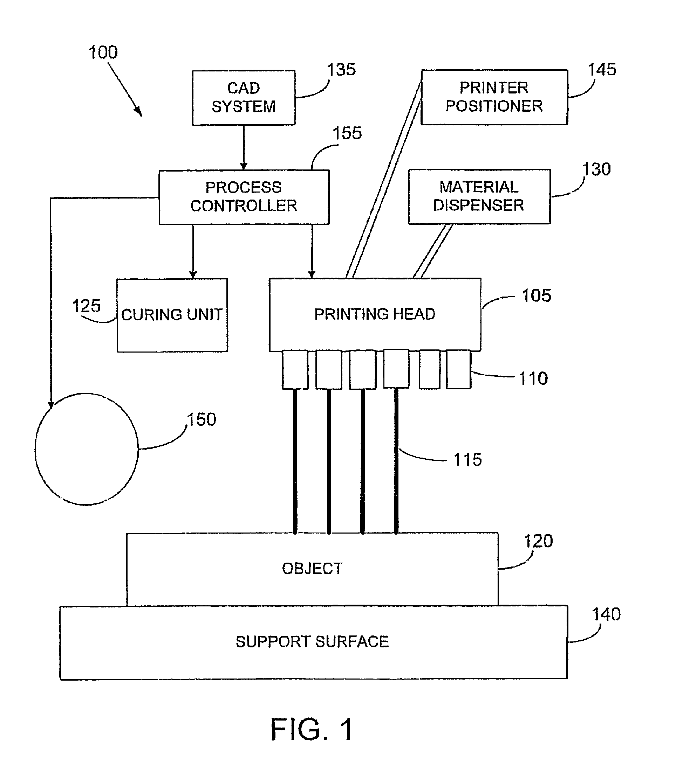

Fig, 2B is an additional schematic view of an object correcting apparatus, usable with the printing apparatus of Fig. 1;

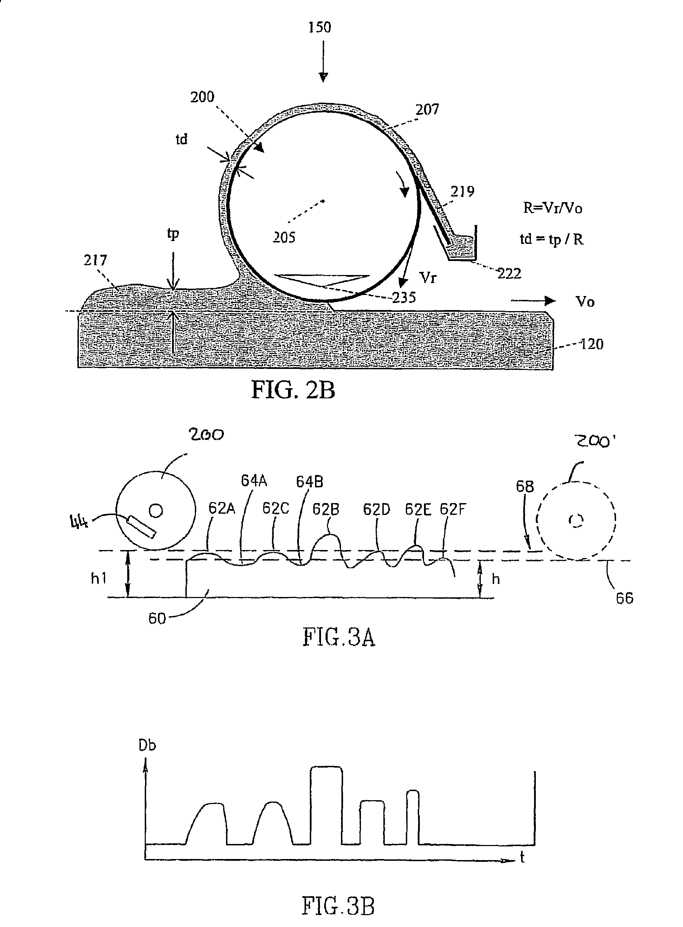

Fig. 3A is a schematic illustration of a layer being treated in accordance with an embodiment of the present invention;

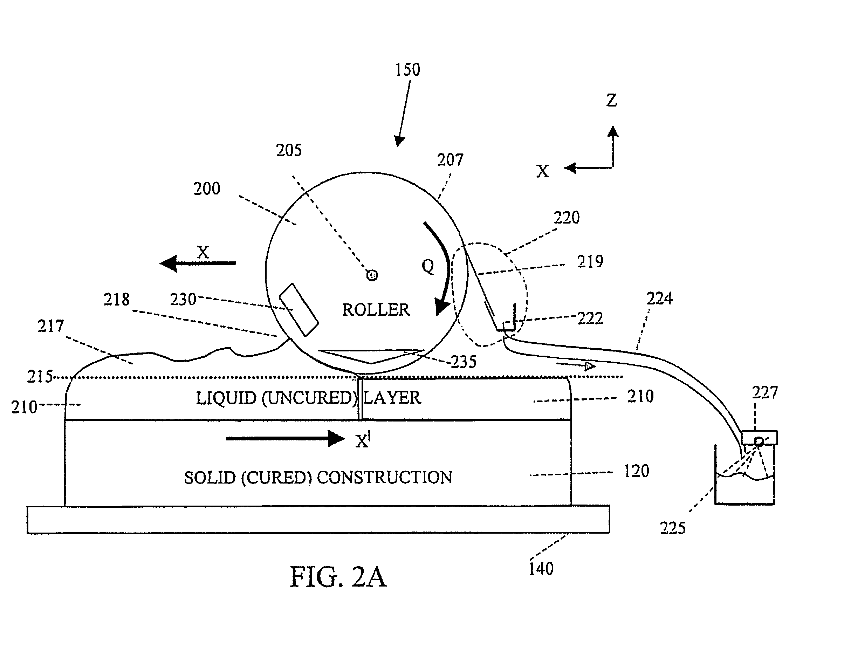

Fig. 3B is a graphical representation of a signal output generated by the object correcting apparatus of Fig. 2;

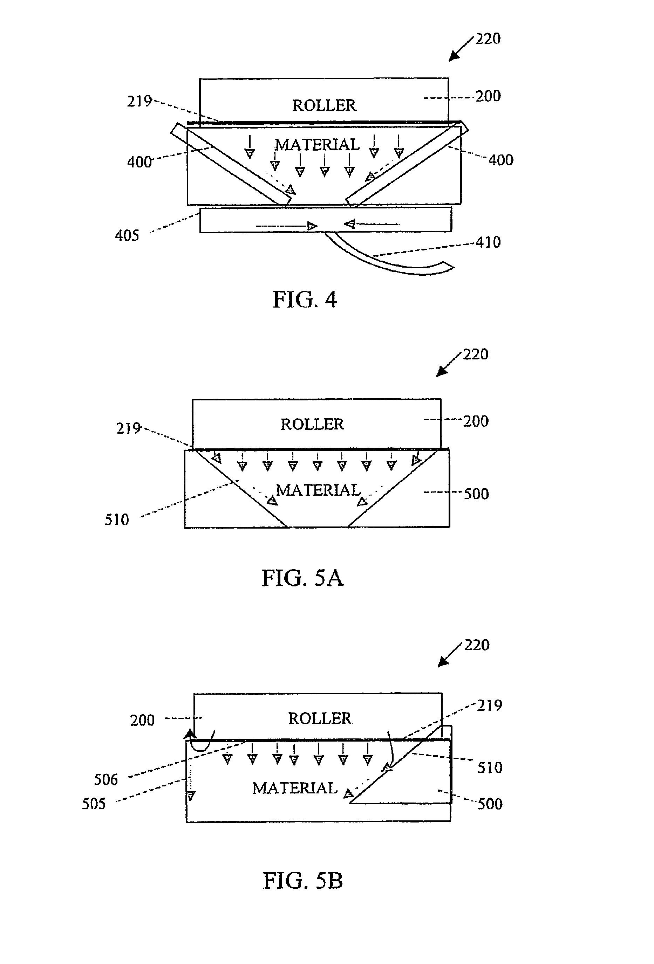

Fig. 4 is a schematic illustration of a roller and cleaning unit that includes a roller wiper (or scraper) with material guiding walls, collecting trough and pipe, in accordance with an embodiment of the present invention;

Figs. 5A and 5B are schematic illustrations of a roller, cleaning unit and repelling coatings attached to the cleaning unit, in accordance with an embodiment of the present invention;

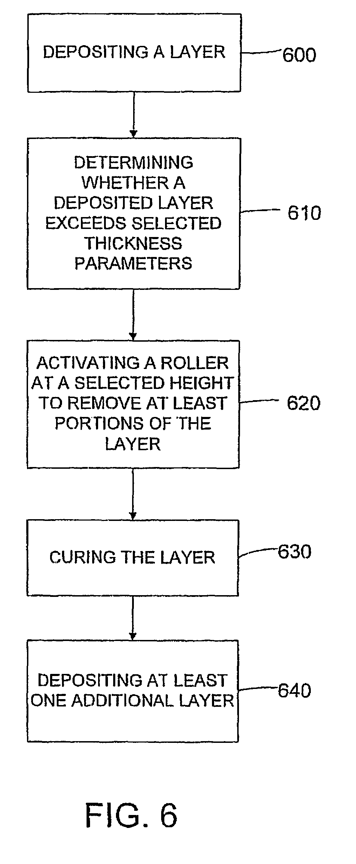

Fig. 6 is a flow chart describing a method of 3-D object building, according to an embodiment of the present invention;

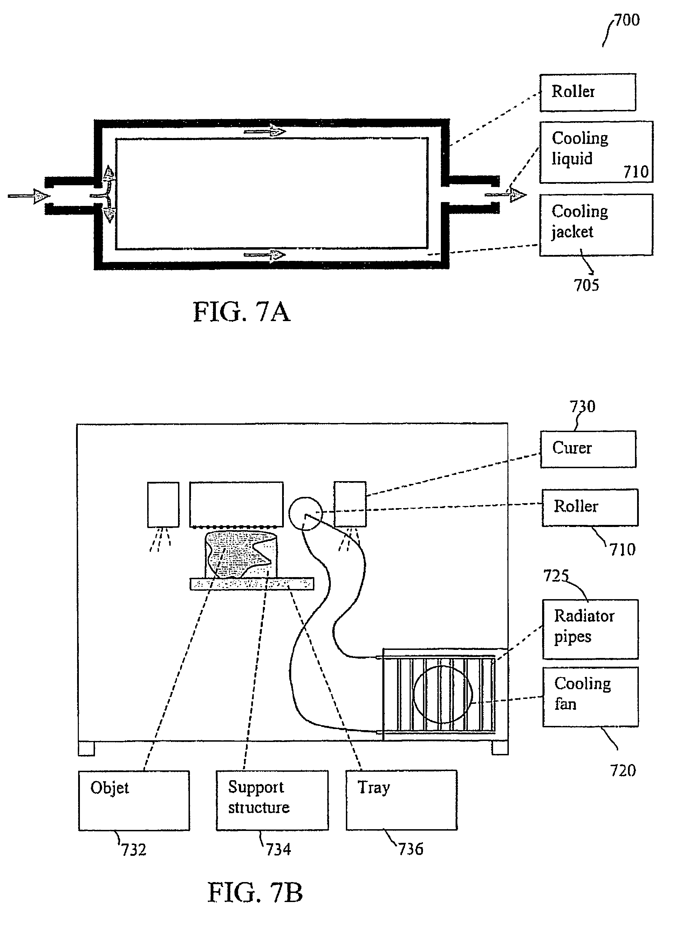

Fig. 7A is a schematic illustration of a cooled roller unit, in accordance with an embodiment of the present invention;

Fig. 7B is a schematic illustration of an air cooling system, in accordance with an embodiment of the present invention,

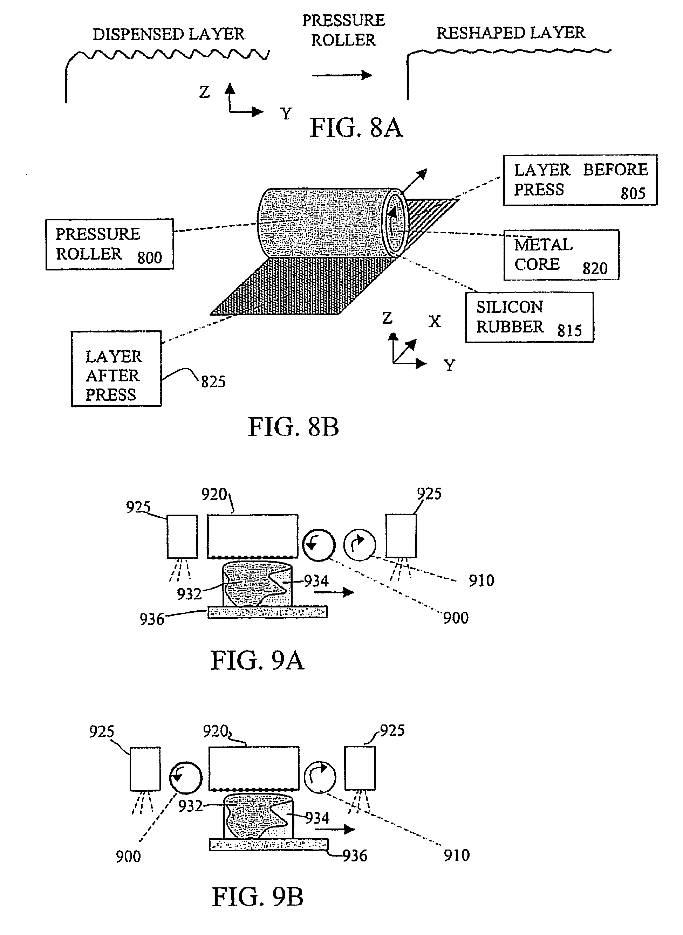

Figs. 8A and 8B are schematic illustrations of a pressure roller in a 3-D printing apparatus, in accordance with an embodiment of the present invention; and

Figs. 9A and 9B are schematic illustrations of pressure and sheer rollers in a 3-D printing apparatus, in accordance with some embodiments of the present invention.

## DETAILED DESCRIPTION OF THE PRESENT INVENTION

The following description is presented to enable one of ordinary skill in the art to make and use the invention as provided in the context of a particular application and its requirements. Various modifications to the described embodiments will be apparent to those with skill in the art, and the general principles defined herein may be applied to other embodiments. Therefore, the present invention is not intended to be limited to the particular embodiments shown and described, but is to be accorded the widest scope consistent with the principles and novel features herein disclosed. In other instances, well-known methods, procedures, and components have not been described in detail so as not to obscure the present invention.

Reference is made to Fig. 1, which is a schematic illustration of a 3-D printing system or apparatus, generally designated 100, constructed and operative in accordance with some embodiments of the present invention. Printing apparatus 100 may include elements that may be operative in building or printing a three-dimensional (3-D) object. One or more elements of 3-D printing apparatus 100, may be similar to the 3-D printing apparatus, described in embodiments described in US Patent No. 6,259,962, titled "Apparatus and method for three dimensional model printing", filed May 3, 1999, US Patent No. 6,658,314, titled "System and method for three dimensional model printing", filed October 6, 1999, and US Patent No. 6,569,373, titled "Compositions and methods for use in three dimensional model printing", filed March 12, 2001, all of same assignees and incorporated herein by reference. Printing apparatus 100 may take on other forms and have other sets of components.

3-D printing apparatus 100 may include one or more printing head(s) 105, each printing head having one or more ink-jet nozzles 110. Ink-jet nozzles 110 may emit or jet out at least one kind of material, for example, interface materials such as building and/or support material 115, or other materials. A 3-D object 120 may be constructed or built up, typically in layers. In one embodiment, the depth of each layer is controllable by selectively adjusting the output from ink-jet nozzles 110. Such control need not be included.

3-D printing apparatus 100 may include a hardening or curing apparatus 125 to cure or otherwise harden one or more of the material(s) 115 emitted from nozzles 110. The curing apparatus may include, for example, a source of electromagnetic (E.M) radiation, for example ultra-violet, visible or infrared radiation, or from electron beam (E.B.) radiation etc. Other curing methods may be used, for example using added substances, changing the temperature, and providing other radiation types, etc. In one embodiment curing apparatus 125 may include a first curing or hardening unit for curing the first interface material; and a second hardening or curing unit for curing the second interface material. Such separate curing need not be used. Other numbers of curing units may be used. Further, as described herein, the curing or hardening apparatus may also cure or harden surplus or waste material removed from the object being built; alternately, a separate curing or hardening apparatus may be used.

Interface material 115 may be a photopolymer material curable by the application of electromagnetic (E.M.) radiation. An example of one such material is a photopolymer material based on acrylate compounds which tend to polymerize when being radiated by E.M. radiation. Material 115 may additionally or alternatively be constructed from other suitable materials. An example of an alternative material is wax. In the case of wax, hardening may be carried out by reducing the temperature of the material after being dispensed. The temperature of the wax in the printing head may be above the melting point of the wax, while the temperature of the cooled layer may be below the melting point. In accordance with some embodiments of the present invention, material 115 may include a first and a second building material, for example, a first and a second interface material dispensed from a first and a second printing head, respectively. Any suitable numbers of printing heads and/or types of interface materials may be used.

Printing apparatus 100 may further include at least one material dispenser 130 and a process controller 155. Process controller 155 may be coupled to a Computer Aided Design (CAD) system 135 or another print data system, and may be associated with curing unit 125 and printing head 105. Controller 155 may be distributed among a number of components, and may include or be embodied in, for example, a processor, a microprocessor, a workstation, a personal computer, etc.

Dispenser 130 may include at least one interface material 115, and may be suitably connected to printing head 105, to supply building, support and/or other suitable material(s) to printing head 105. 3-D object 120 may be formed on a support surface or tray 140, which may be movable in at least the Z-axis. When used herein, generally, the Z axis refers to a direction perpendicular to the building plane, e.g., vertical, and the X and Y directions generally define the building plane. For example, the X direction may be the relative direction in which the dispensing heads and the object correcting apparatus 150 move with respect to the object 120 being built during material dispensing. For example, Y may be the indexing direction, where movement in the Y direction may or may not be accompanied by material dispensing. However, the X, Y and Z directions are relative terms; in other embodiments such axes may be interchanged. "Relative movement" as used herein may indicate that a relative movement is performed between head 105 and object 120, irrespective of whether either the heads or the object move or both move with respect to the machine's external structure.

Printing apparatus 100 may include a height control mechanism or printing positioner 145, to enable control of the relative positioning (for example, x, y and z locations) of printing head 105 and/or of support surface 140. Printing positioner 145 may include, for example, motors or servo mechanisms. For example, printing positioner 145 may be adjusted following the deposition of each layer of an object being constructed, to enable control of the height of the object being constructed.

Printing apparatus 100 may include an object correcting apparatus 150, to adjust, conform or otherwise control the thickness of the dispensed layers. Object correcting apparatus 150 may include, for example, a rotatable roller.

Reference is now made to **Fig. 2A**, which is a schematic elevation view of object correcting apparatus 150, according to some embodiments of the present invention. Object correcting apparatus 150 may include a roller 200, rotatable about an axis 205. Roller 200 may be operated at selected rotational speeds and/or directions. Roller 200 may be connected to a suitable motor (not shown), for example, a stepper, DC motor or other suitable motor, possibly via gears, a drive train, etc., and may be coupled to process controller 155. Roller 200 may be operative to make contact with a layer 210 of an object being constructed, for example a support layer or building layer, and to remove surplus or waste material 217. The desired finished or finishing level of layer 210 is shown by a dashed line 215. It will be appreciated that the reference to layer 210 is not restricted to a single layer but may comprise one or more layers (such as three layers). In some embodiments, object correcting apparatus 150 may correct several layers at one time; e.g., every third layer. A single layer is shown in interface layer 210 for clarity. For example, interface material protruding beyond a selected height (e.g., line 215) may be removed from layer 210 by roller 200. The relative space between the top of construction 120 and roller 200 may be set to any pre-determined level to remove an amount of surplus or waste material 217. In some embodiments, a leveling apparatus may regularly (e.g., every built layer, every other built layer) be passed over the surface of the built object at a certain height

For example, after a layer 210 is dispensed, roller 200 may level, trim, remove, or otherwise alter at least portions of the layer or an object being printed. In one example surplus material may be removed from one or more dispensed layers by being drawn onto and/or over the roller. A support surface or tray 140 that supports construction 120 may be moved down (D) by a pre-determined amount, which is smaller than or equal to the thickness of the dispensed material, to enable a subsequent layer(s) to be deposited and optionally altered by roller 200. The difference D-M represents the amount of surplus interface material that roller 200 is to remove. In one example, D=16$\mu$ and M=22$\mu$, and therefore roller 200 may remove 6$\mu$. Other criteria and/or dimensions for altering may be used. In an alternate embodiment, tray 140 may not move, but object correcting apparatus 150 and the dispensing (and possibly hardening) apparatus may move. In some embodiments, both the X and Y movement of the object relative to the dispensing, curing and height control apparatus may be controlled by the tray 140; in other embodiments, the X and/or Y relative movements may be controlled by moving the dispensing, curing and height control apparatus in the X and/or Y direction and keeping the tray 140 fixed in the relevant direction.

Roller 200 may rotate about the Y axis that is perpendicular to the X and Z axes, where X is the relative main scanning direction of the print head in respect to the printing surface, and Z is the direction of the print head relative movement from layer to layer in respect to tray 140. Other labels for axes may be used Printing head 105 (in Fig. 1) may eject material while moving in the main scanning direction in respect to tray 140. The roller may be rotated in one or more selected directions. In one example, the roller may be rotated in a constant direction. In another example the direction of rotation may be toggled every change in X direction of movement of the roller.

The rotation of the roller 200 may be in a contrary, opposite or reverse direction to the relative 'movement' of the object beneath it. This means that the lower surface of roller 200 that is in contact with the deposited layer may move (as a result of the rotation) in the opposite or contrary direction to that of the movement of the object relative to the roller, For example if the roller 200 moves in a direction X relative to the object, (e.g., the arrow labeled X in Fig. 2A) the object 'moves' relative to roller 200 in the opposite direction -X (e.g., the arrow labeled X' in Fig. 2A) and the portion of the roller in contact with the object moves in a direction opposite to X', for example, in the X direction, which is consistent with the rotation direction, for example according to arrow Q in Fig. 2A. In other words, the portion of the roller in contact with the object may move in a direction X relative to the object as a result of both the linear relative movement of the roller in relation to the movement of the object, and the rotation of the roller. This is opposite to the direction of rotation that an object such as a cylinder, a tire, etc. would have when rolling naturally along a surface.

Roller 200 may include a cleaning unit 220, for example, which may include any suitable cleaning devices and/or agents, for example, a wiping blade, knife, roller, brush or other suitable cleaning device. For example, a metal blade 219, such as a 50$\mu$ steel blade or other suitable cleaning mechanisms may be used. In one embodiment cleaning blade 219 may be pressed against roller 200 at, for example, a 5 to 40 degree tilt between the blade and the roller surface 207; other suitable angles may be used. Cleaning unit 220 may wipe or scrape off or otherwise remove the waste material, for example, excess liquid or semi-liquid interface material, from the roller surface 207, and may transfer the waste material through intermediate reservoir or liquid conduit 222 and pipe 224 into a waste disposal container 225, for example a container, trough or other suitable apparatus. The waste material may be discarded from the intermediate reservoir 222 to the disposal container 225, for example, by being drained or pumped. According to an embodiment of the invention, waste disposal container 225 may include a hardening or curing apparatus 227, for example a UV lamp, a device producing another type of electromagnetic radiation, a material cooling apparatus, or another suitable apparatus. This may enable the waste material to be cured or hardened before disposal for example to render the waste material inert and safe. Curing apparatus 227 may be separate from an object curing apparatus 125; however in some embodiments the same unit may be used. Cleaning unit 220 may be coupled to process controller 155, which may aid the operation of cleaning unit 220.

Roller 200 may be operated to peel off a portion of the last layer(s) 217 dispensed. As can be seen with reference to **Fig. 2B,** R is the ratio of the circumferential roller speed *(Vr)* to the relative linear speed of the object *vs.* the roller (*Vo*). Since the roller may be rotated in a contrary or "opposite" direction to the movement of the object, the thickness (*td*) of the disposed material layer that is drawn onto and attaches to the roller surface may be equal to the thickness (*tp*) of the portion of the layer peeled from the object divided by the ratio (*R*). In symbolic terms this can be written as:

$$R = Vr/Vo$$

$$td = tp / R.$$

The latter expression is just a manifestation of material conservation. Other suitable formulae may be used.

In order to keep the 'thickness' of the material drawn onto roller 200 thin, the requirement of R>1 may be set. When the rotation speed is low (R close to 1) the surplus material of the object "senses" moderate acceleration when it begins attaching to the roller, and therefore a relatively thick portion of the object layer may be peeled off by the roller. On the other hand, when the rotation speed is high (R >> 1) the peeled material may "sense" greater acceleration and therefore only a thin portion of the layer may be peeled off. The chances of the roller making contact with solidified portions of the top layer is reduced at low rotation speed. The flatness of top layer 217 as well as the sharpness of the top edges of object 120 may be improved as a consequence of high-speed rotation. At very high rotation speed, however, drops of material may fly off roller surface as a result of the high centrifugal force. In one embodiment the following restrictions may be configured for roller rotation speed: 1<R<20. Other speed restrictions may be used. This means that the angular speed of roller 200 may be limited to a range wherein the circumferential speed of roller 200 is between 1 and 20, multiplied by the relative movement in X between object 120 being built and roller 200. The relative X movement may be considered to be between roller 200 as a whole and the object, separate from rotational movement of roller 200.

In one embodiment of the present invention, roller 200 may function as a liquid 'pump'. This is opposed to a roller such as a grinding roller, which may shave off solid material. The 'pumping' may be expressed by the lifting or 'drawing' of excess liquid off the liquid layer by roller 200, as shown for example in Fig. 2B, rather than an action of pushing excess liquid ahead of roller 200 in the scan direction or to the sides. As such, roller 200 may have a smooth operating surface 207. A smooth surface, for example, may enable subsequent scraping of the excess material off roller 200 by wiper or blade 219. In another embodiment roller surface 207 may be slightly rough and/or porous. If, for example, roller 200 is marginally rough yet still smooth enough to act as a liquid pump, the slight roughness may add some grinding capability to the operation of roller 200. This may help when roller 200 encounters hard material rather than liquid, which may occur from time to time. Roller 200 may or may not be heated and/or cooled by at least one dedicated heating or cooling mechanism 235. Roller 200 may be made of or may have a surface made of, for example, aluminum or other suitable metals, and surface 207 may be anodized in order to minimize wear of the roller by its cleaning blade. In order to lessen wear of a cleaning unit, for example, blade 219, surface 207 may be porous (e.g. anodized coating) and may be impregnated by a lubricating material (e.g., Teflon™ non-stick coating). This may also reduce the load on the roller motor by reducing the friction between the roller and its cleaning blade.

The roller length in a Y direction, according to some embodiments of the present invention, may be exactly or substantially equal to the length of a nozzle array (e.g., 110 in Fig. 1) in the Y direction, or it may be larger than the nozzle array in the Y direction. The first option may require an accurate Y alignment of roller 200 relative to nozzle array 110, while the second option may require an accurate alignment of the roller being parallel to the Y axis in the Y-Z plane.

Object correcting apparatus 150 may include at least one sensing apparatus 230, which may be, for example, embedded within roller 200 or may be external to roller 200, to enable, for example, printing apparatus 100 to determine whether collision of the printing apparatus has occurred or is expected to occur. Such a collision may be with the object being printed, for example, as a result of dispensed layers being too thick and/or inconsistent in thickness, and/or because of a mechanical malfunction of the printing machine. Collision may also occur as a result of material spill or faulty interface material deposition that may occur anywhere in the path of the printing apparatus. For example, sensing apparatus 230 may be or include an acceleration-sensing device to determine whether a collision of the printing apparatus and the object being printed has occurred or may likely occur. In another example sensing apparatus 230 may be a shock sensor, for example, to determine whether a collision has taken place between the printing apparatus and an element on a printing table that protrudes beyond the operating level of an object correcting apparatus.

Since a collision may be generally accompanied by shock waves and/or vibration that travel along the colliding object, an acceleration-sensing device may be used to sense resulting waves and may transmit a corresponding output signal. The strength (or height) of such a signal depends on the level of the collision. Once the controller receives a signal that is stronger than a certain predetermined level, the controller may define the signal as a collision, and immediately stop the printing sequence, to prevent further damage to the moving and/or other parts.

In one embodiment, for example, sensing device 230 may be configured to audibly indicate the roller's contact with the interface material. As roller 200 makes contact with a peak or protruding area of layer 210, for example at peak 218, or possibly with an edge of a layer 210, if the roller 200 approaches the layer 210 at too low a level, sensing device 230 may indicate the presence of the peak or protrusion by a change in sound, for example a distinguishable (e.g., louder) sound due to the roller's longer contact with layer 210. Areas where there is an absence of interface material 210 may be indicated, for example, by the lack of sound emitted by sensing device 230. In some embodiments, as roller 200 makes contact with layer 210, the sound emitted at each position may change owing to the size of the peaks etc. For example, contact with a higher peak may emit a 'louder' sound than contact with a lower peak. Troughs may be indicated by the absence of a sound or by alternative sounds. Other indications may be provided to identify peaks and troughs etc. in interface material 210. The contact or lack of contact between roller 200 and layer 210 may be monitored and/or processed by the process controller, for example, continuously, periodically, randomly etc., to enable determination of the contour of layer 210.

According to some embodiments of the present invention, as can be seen with reference to Fig. 2A, roller 200 may be associated with a cleaning unit, which may include, for example a scraper or blade 219. Blade 219 may be angled at various suitable angles to the tangent of the roller surface. In Fig. 2A, the scraper or blade 219 is shown at an approximate 25° tilt between blade 219 and the roller surface 207; other suitable angles may be used.

Reference is now made to **Fig. 3A,** which illustrates the use of object correcting apparatus 150 to control the finished height or thickness of a layer of an object being built, according to an embodiment of the present invention. In the example illustrated in Fig. 3A in the layer being printed there are a set of peaks 62a, 62b, 62c, 62d, 62e, and 62f, and a set of troughs 64a, 64b, etc. The peaks and troughs are exaggerated for illustrative purposes. Peaks 62A, 62C and 62D are at approximately the same level (e.g., with reference to line 66) while peaks 62B and 62E project above reference line 68. As roller 200 passes over layer 60, process controller may receive input from sensing device 230 indicating a set of peaks, of which peak 62B may be expected to stand out. Process Controller 155 (in Fig. 1) may determine the cross-sectional elevation of layer 60 from, for example, the sound signals received, and thus determine the height of each of the peaks.

In one embodiment of the present invention, sensing device 230 may be configured to audibly indicate the roller's contact with the interface material. Reference is now made to **Fig. 3B,** which illustrates an example of a graphical representation of the sound level as roller 200 makes contact with layer 60, according to an embodiment of the present invention. The vertical axis represents the intensity level (dB) of the sound and the horizontal axis represents the time. The height of each peak in Fig. 3A correlates with the dB level recorded when roller 200 is in contact with each of the peaks, as depicted in Fig. 3B. The time period at a particular dB level correlates with the width of the peaks in Fig. 3A. Thus, it is possible to determine the parameters of layer 60, such as the amplitude, height and width of the peaks. In this way, for example, a profile of layer 60 may be generated.

For example, as roller 200 makes contact with a peak or protruding area of layer 210, for example at peaks 62B and/or 62E, sensing device 230 may indicate the presence of the peak or protrusion by a change in sound, for example a distinguishable (e.g., louder) sound due to the roller's longer contact with layer 210. Areas where there is an absence of interface material 210, for example troughs 64A and 64B, may be indicated by the lack of sound emitted by sensing device 230. In some embodiments, as roller 200 makes contact with layer 210, the sound emitted at each position may change owing to the size of the peaks etc. For example, contact with peak 62B may emit a 'louder' sound than contact with peak 62E. Troughs 56 may be indicated by the absence of a sound or by alternative sounds. Other indications may be provided to identify peaks and troughs etc. in interface material 210. The contact or lack of contact between roller 200 and layer 210 may be monitored and/or processed by the process controller, for example continuously, periodically, randomly etc., to enable determination of the contour of layer 210.

Referring to **Fig. 4,** cleaning unit 220 may be associated with, for example, a guide, such as a barrier, set of walls, coating or substance, etc., constructed or oriented to direct material flowing along the blade or scraper 219, for example to a collection point, away from the edges of the device, etc. For example, a set (where set may include one) of walls 400, mounted on or extending from the surface of blade 219, possibly in a tilted pattern, placed in a suitable location, for example, coupled to a drainage mechanism, for example, trough or container 405. Walls 400 may be flexible, for example made of silicone rubber. This may enable the blade to bend when pressed against the roller's surface Walls 400, for example, may direct the wiped or cut material, for example liquid or a semi-liquid, in the direction of a selected location. For example the waste material may be directed to collection trough 405 and/or to the entrance aperture of a drainage pipe 410.

In some embodiments, as can be seen with reference to **Figs. 5A** and **5B**, a cleaning unit 220, or part or parts of a cleaning unit, for example a scraper or blade 219, walls 500 and/or other suitable parts, may be coated with coating or material 510, such as a repellent substance that repels the building and/or interface material. For example, materials of high surface tension relative to the building material (e.g., Teflon™, silicone coating or other suitable material) may be used. Coating 510 may be placed on the scraper or blade in a pattern, such as the example shown in Fig. 5, such that removed material is generally guided along surface of cleaning unit part (e.g., wall 500) to area 520. Coating or material 510 may guide or cause surplus material to flow towards a certain point (e.g., the center, one side, etc.) of the blade, or to prevent surplus material from flowing off the edges of the blade. The coating 510 may, at a point where the blade contacts the roller, protrude from the sides of cleaning unit 220, for example, into the section of cleaning unit 220 (e.g., a blade) that touches roller 200. In one embodiment coating 510 may be applied to the opposite side of blade 219. Coating 510 may also serve to prevent the interface material from flowing to the sides of cleaning unit 220, and/or from the sides of cleaning unit to the back of cleaning unit 220. **Fig. 5B** depicts a repellent coating 510 on one side only, to indicate the effect of such coating, in contrast to the behavior of the liquid building material that does not make contact with a repellant coating. Arrows in Fig. 5 depict the movement of material, affected by the coating. As can be seen at feature 505, material may drip or otherwise be directed from the other side 506 of the blade. Other movement patterns may be used; for example, material may flow to a side.

Reference is now made to **Fig. 6** which is a flowchart describing a method of building a 3-D object, including determining a selected thickness of layers, according to an embodiment of the present invention. At block 600 a layer may be deposited. In one embodiment of the present invention, each layer deposited may be approximately $25\mu$ thick, or have other suitable thiclcnesses, and roller 200 may be set to remove a selected amount of interface material, for example up to $10\mu$ from layer 210. Layer 210 may not have a consistent thickness along its entire length and may include a set of peaks or ripples 62 and troughs 64 etc. (see Fig. 3A). In the example depicted in Fig. 3A, peaks may be approximately level with reference line 215. Other desired or required interface material levels, or combinations of levels, may be used. It will be appreciated that layer 210 is not restricted to a single layer and may include one or more layers.

At block 610 a sensing mechanism may determine whether a deposited layer exceeds selected thickness parameters.

At block 620, if the layer exceeds selected thickness parameters, a leveling device such as roller may be activated at a selected height to remove, level or clean at least portions of the layer, for example, all portions exceeding a selected thickness. In an alternate embodiment, a roller or other leveling device may level at a fixed height after all or after each $X^{th}$ (e.g., second) pass of a printing head.

The leveling step, whether selectively activated or used automatically and at a set level, may enable assuring an even and proper (consistent) layer height, as may be necessary for achieving an accurate height dimension of the model. Such leveling, for example, may help eliminate scratches, gaps, excessive material buildups or other inconsistencies that may result from missing or weak nozzles or abnormally strongly ejecting nozzles. Such leveling, for example, may help sharpen the edge of a previously printed or deposited layer before dispensing the following layer, so as to have the ejected droplets of the following layer landing on suitable locations or spots. The edge of the layer before leveling may tend to be rounded (as opposed to vertically sharp) because of the phenomenon of liquid surface tension. The building of an object may include building-up of several layers, for example three layers, prior to cleaning of the topmost layer using roller 200.

At block 630, layer 210, preferably after having been smoothed or leveled by roller 200, may be cured by curing mechanism 125, for example using UV and/or IR. Curing may convert, for example, photopolymer chemical material into a solid, and thus effectively neutralize the properties of the photopolymer material. Residue material attached to roller 200 and/or cleaning unit 220 may be neutralized or hardened by, for example, curing. Thus, it will be appreciated that as a by-product of printing apparatus 100, UV or IR curing may be used to neutralize waste photopolymer material.

At block 640 an additional layer may be deposited. Any combination of the above steps may be implemented. Further, other steps or series of steps may be used.

According to some embodiments of the present invention, a cooled roller may be used to adjust the layer thickness. A substantial amount of heat is produced in the printing cell as a result of the need to warm up the building liquid material in the inkjet head before being dispensed, the heat associated with the E.M. radiation that may be necessary for curing the building material, and/or the heat that is produced by the exothermic chemical process of photo-polymerization, As a result of the heat, the printed object becomes hot, and the subsequent cooling down of the object may be accompanied with shrinkage, possibly causing deformation in the object.

According to one embodiment of the present invention, as can be seen with reference to **Fig. 7A,** in order to reduce the shrinkage effect, roller 700 may be cooled or used to cool down the top layer or layers after being dispensed. This may be implemented by cooling the roller, for example, by a cooling liquid 710 that flows through roller 700. A cooling jacket 705, which surrounds roller 700, may contain cooling liquid 710. For example, cooling liquid 710 may be inserted between cooling jacket 705 and roller 700. Other methods of cooling may be used.

According to one embodiment of the present invention, in order to reduce the shrinkage effect or for other purposes, cold air may be used to cool at least the top layer during the building process. As can be seen with reference to **Fig. 7B** a cooling fan 720, associated with radiator pipes 725, may provide cool air, for example, air blasts, to roller 700, or to the surface af the object. Other cooling mechanisms may be used

A roller, for example, a shear cut roller, may remove a significant amount of building material (e.g., between 10 to 30%), which may be the percentage of excess material wiped off a layer and, for example, transmitted to the waste container. Attempts to reduce this high consumption of material, for example, by fixing a greater layer thickness for the layers, without changing the amount of material deposited by the nozzles for each layer, and thus reducing the amount of surplus material removed by the shear cut roller, may result in relatively poor building quality. For example, such a configuration may generally cause layer edges to be less sharp and/or the outer surface/s of the object to be less smooth. According to some embodiments of the present invention, for example as can be seen with reference to **Figs. 8A and 8B,** a pressure roller 800, which may be used separately and/or in addition to a shear cut roller, may be used. Pressure roller 800, which may include a metal core or other suitable core type may be rolled on a layer 805 of an object in the "forward" direction such that the roller's surface rotates at the same tangent speed as the relative speed of the object towards roller 800, to condense the dispensed material and thereby help improve the printing quality. The rotation speed and direction may be similar to the action of a car wheel rolling on the road. In the present case, the roller may act like an iron or a press, by inducing pressure on the dispensed layer from above, and as a consequence spaces between lines of injected material may be filled up and the layer edge may be reshaped.

In some embodiments, in order to prevent the dispensed material from sticking to roller 800, a repelling layer of, for example, Teflon or silicone rubber 815 may coat roller 800. In one embodiment Teflon may be applied to an anodized aluminum roller by impregnation. In one embodiment a minimal softness of the roller surface may be necessary, for example, to deal with extraordinary protrusions on layer 805. In such a case a layer of, for example, 10 to 100μ thick Silicone rubber, for example, may be used to coat the roller 800. Other suitable substances may be used.

In one embodiment roller 800 may not generally consume material, and therefore may not act as a leveling roller, According to one embodiment of the present invention, pressure roller 800 may be combined with a leveling apparatus, for example, a shear cut roller. Such a combination may enable the shear cut roller to be adjusted to consume relatively small amounts of material (e.g., 5-10%) and yet the build quality may be relatively high. In one embodiment, as can be seen with reference to **Fig. 9A**, the pressure roller 900 may be on the same side of the printing head 920 as the shear roller 910, and may be positioned before shear roller 910, to enable compressing or condensing the deposited material before shear roller 910 removes surplus material above a predetermined layer height, thus reducing the amount of material required to be removed by shear roller 910. In another embodiment, as can be seen with reference to **Fig. 9B,** pressure roller 900 may be on the other side of printing head 920. Other elements and configurations of elements may be used.

In some embodiments pressure roller 900 may be most effective when acting on a liquid layer before curing, for example, as is the case depicted in Fig. 9A. Alternatively, as depicted in Fig. 9B, the pressure roller may be effective when acting on the partially-cured previous layer, prior to deposition of a new layer of material, the subsequent leveling of new layer by the shear roller, and the curing of the new layer.

In one embodiment of the present invention, the roller or rollers (e.g., pressure and/or shear rollers) may each rotate only in one direction. In such a case, the pressure roller may receive its rotation power from the same motor that empowers the shear roller, even though the respective speeds and rotation directions of each of the rollers may be different. Each and/or both of the rollers may continue to rotate only in one direction, respectively, irrespective of whether one or both of the rollers are in contact with the upper surface of the object (such as in the forward X movement of the block bearing the roller/s) or there is a space between the roller or rollers and the object's upper surface (such as in the reverse X movement of the block bearing the roller(s), the printing tray having optionally been lowered in the Z direction, between forward and reverse X movements).

In another embodiment of the present invention, the rotation direction of one or both or more of the rollers may be toggled from one direction to another, for example every relative X movement of the object. In such a case the roller or rollers may receive their rotation power from the X scan motor, which may also bring about such change in rotation direction for example, every X movement of the object.

**Claims**

1. A method for printing a three-dimensional object (120) on a printing tray (140), the method comprising:

dispensing material (115) from a printing head (105) in a printing apparatus to form a layer (210) of the object (120);

altering the thickness of the dispensed layer (210) to a pre-determined value using a correcting apparatus (150), said apparatus (150) including a roller (200) **characterized in that** the roller is operative to make contact with said layer (210) to lift surplus material (217) from the surface of said layer (210) onto the roller (200) by traveling in a first direction while rotating in a direction opposite to the first direction at a selected rotation speed R,

wherein the rotation speed R, being the ratio of a circumferential roller speed to relative linear speed of the object (120) and the roller (200), is selected to control the thickness of the material drawn onto the roller (200) so as to increase layer flatness and layer edge sharpness.

2. The method according to claim 1, comprising detecting an actual or potential collision of said printing apparatus with cured material (62) protruding above the operating level of said roller (200).

3. The method of claim 2, further comprising ceasing printing operation when a collision has been detected.

4. The method according to any preceding claim, comprising heating said roller (200).

5. The method according to any one of claims 1 to 3, comprising cooling said roller (200).

6. The method of claim 5, wherein said cooling is performed using one or more elements selected from the group consisting of a cooling jacket (705) coupled to a roller (200), a cooling liquid (710), radiator pipes (725) and a cooling fan (720).

7. The method according to any preceding claim, comprising scraping said surplus material (217) from the roller surface (207) using a blade (219).

8. The method according to claim 7, wherein said blade (219) includes at least one flexible guide (400) oriented to direct said surplus material (217) flowing along the blade (219) to a collection point (222), away from the edges of the blade (219).

9. The method according to claim 8, wherein said guide (400) is selected from the group consisting of a barrier, a set of rubber walls, or a repellent coating (510) or substance.

10. The method according to any preceding claim, comprising transferring surplus material (217) into a waste disposal apparatus (225).

11. The method according to any preceding claim, comprising curing said surplus material (217).

12. The method according to any preceding claim, wherein actual or potential collisions of a part of said printing apparatus with cured material (62) protruding above the operating level of said roller (200) are detected by a mechanism (230,155), and wherein operation of the printing apparatus is optionally ceased when an actual or potential collision has been determined.

13. The method according to claim 12, wherein said mechanism comprises one or more sensors (230, 155) selected from the group comprising acceleration sensors and shock sensors.

14. The method according to any preceding claim, wherein the roller (200) has a smooth surface (207).

15. The method according to any one of claims 1 to 13, wherein the roller (200) has a porous surface (207), which is optionally impregnated with a lubricating material.

16. The method according to any preceding claim wherein the printing tray (140) is lowered in a Z direction relative to the printing apparatus, between forward and backward X movements of the printing apparatus.

**Patentansprüche**

1. Verfahren zum Drucken eines dreidimensionalen Gegenstands (120) auf einer Druckunterlage (140), wobei das Verfahren aufweist:

Abgeben von Material (115) aus einem Druckkopf (105) in einer Druckvorrichtung, um eine Schicht (210) des Gegenstands (120) zu bilden; Ändern der Dicke der abgegebenen Schicht (210) auf einen vorbestimmten Weit unter Verwendung einer Korrigiervorrichtung (150), wobei die Vorrichtung (150) eine Walze (200) aufweist, **dadurch gekennzeichnet, dass** die Walze wirksam ist, mit der Schicht (210) in Berührung zu kommen, um durch Laufen in einer ersten Richtung überschüssiges Material (217) von der Oberfläche der Schicht (210) auf die Walze (200) zu heben, während sie sich in einer Richtung entgegengesetzt zur ersten Richtung mit einer gewählten Drehgeschwindigkeit R dreht,

wobei die Drehgeschwindigkeit R, die das Verhältnis aus einer umfänglichen Walzengeschwindiglceit zur relativen linearen Geschwindigkeit des Gegenstands (120) und der Walze (200) ist, so gewählt ist, dass die Dicke des auf die Walze (100) gezogenen Materials so gesteuert ist, dass sich die Schichtebenheit und die Schichtkantenschärfe erhöhen.

**2.** Verfahren nach Anspruch 1, wobei es aufweist: Erfassen einer tatsächlichen oder möglichen Kollision der Druckvorrichtung mit ausgehärtetem Material (62), das über die Betriebshöhe der Walze (200) vorsteht.

**3.** Verfahren nach Anspruch 2, wobei es weiterhin aufweist: Anhalten des Druckvorgangs, wenn eine Kollision erfasst worden ist.

**4.** Verfahren nach einem vorhergehenden Anspruch, wobei es aufweist: Erwärmen der Walze (200).

**5.** Verfahren nach einem der Ansprüche 1 bis 3, wobei es aufweist: Kühlen der Walze (200).

**6.** Verfahren nach Anspruch 5, wobei das Kühlen unter Verwendung eines oder mehrerer Elemente durchgeführt wird, das (die) aus der Gruppe ausgewählt ist (sind), die einen an die Walze (200) angekoppelten Kühlmantel (705), eine Kühlflüssigkeit (710), Radiatorröhren (725) und ein Kühlgebläse (720) aufweist.

**7.** Verfahren nach einem vorhergehenden Anspruch, wobei es aufweist: Abkratzen des überschüssigen Materials (217) von der Walzenoberfläche (207) unter Verwendung einer Klinge (219).

**8.** Verfahren nach Anspruch 7, wobei die Klinge (219) zumindest eine flexible Führung (400) aufweist, die so orientiert ist, dass sie das überschüssige Material (217), das entlang der Klinge (219) zu einer Sammelstelle (222) fließt, von den Kanten der Klinge (219) weg richtet.

**9.** Verfahren nach Anspruch 8, wobei die Führung (400) aus der Gruppe ausgewählt ist, die eine Barriere, einen Satz Gummiwände, oder eine abstoßende Beschichtung (510) oder Substanz aufweist.

**10.** Verfahren nach einem vorhergehenden Anspruch, wobei es aufweist: Überbringen des überschüssigen Materials (217) in eine Abfallentsorgungsvorrichtung (225).

**11.** Verfahren nach einem vorhergehenden Anspruch, wobei es aufweist: Aushärten des überschüssigen Materials (217).

**12.** Verfahren nach einem vorhergehenden Anspruch, wobei tatsächliche oder mögliche Kollisionen eines Teils der Druckvorrichtung mit ausgehärtetem Material (62), das über die Betriebshöhe der Walze (200) vorsteht, durch einen Mechanismus (230, 155) erfasst werden, und wobei der Betrieb der Druckvorrichtung optional angehalten wird, wenn eine tatsächliche oder mögliche Kollision bestimmt worden ist.

**13.** Verfahren nach Anspruch 12, wobei der Mechanismus einen oder mehrere Sensoren (230, 155) aufweist, der (die) aus der Gruppe ausgewählt ist (sind), die Beschleunigungssensoren und Stoßsensoren aufweist.

**14.** Verfahren nach einem vorhergehenden Anspruch, wobei die Walze (200) eine glatte Oberfläche (207) aufweist.

**15.** Verfahren nach einem der Ansprüche 1 bis 13, wobei die Walze (200) eine poröse Oberfläche (207) aufweist, die optional mit einem Gleitmaterial imprägniert ist.

**16.** Verfahren nach einem vorhergehenden Anspruch, wobei die Druckunterlage (140) zwischen Vorwärts- und Rückwärtsbewegungen in X-Richtung der Druckvorrichtung relativ zur Druckvorrichtung in Z-Richtung abgesenkt wird.

**Revendications**

**1.** Procédé pour imprimer un objet (120) à trois dimensions, sur un plateau (140), le procédé comprenant :

-- délivrer un matériau (115) à partir d'une tête d'impression (105) sur un appareil d'impression pour former une couche (210) de l'objet (120) ;
-- altérer l'épaisseur de la couche déposée (210) à une valeur prédéterminée en utilisant un appareil de correction (150), ce dernier incluant un rouleau (200),

**caractérisé en ce que** le rouleau est conçu de manière à entrer en contact avec ladite couche (210), pour enlever du matériau (217) en surplus à partir la surface de ladite couche (210) sur ledit rouleau (200) en se déplaçant dans une première direction tout en étant en rotation dans une direction opposée à la première direction, à une vitesse de rotation choisie R, tandis que la vitesse de rotation R, qui est le ratio de la vitesse du rouleau circonférentielle par rapport à la vitesse linéaire relative de l'objet (120) et du rouleau (200), est choisie pour contrôler l'épaisseur du matériau tiré sur le rouleau (200) afin d'augmenter le caractère plan de la couche, et le tranchant du bord de la couche.

2. Procédé selon la revendication 1, **caractérisé en ce qu'**il comporte l'étape de détecter une collision effective ou potentielle desdits appareils d'impression avec le matériau (62) séché faisant saillie au-dessus du niveau opératoire dudit rouleau (200).

3. Procédé selon la revendication 2, **caractérisé en ce qu'**il comporte en outre l'étape de cesser l'opération d'impression lorsqu'une collision a été détectée.

4. Procédé selon l'une des revendications précédentes, **caractérisé en ce qu'**il comporte l'étape de chauffer ledit rouleau (200).

5. Procédé selon l'une des revendications 1 à 3, comprenant l'étape de refroidir ledit rouleau (200).

6. Procédé selon la revendication 5, **caractérisé en ce que** ledit refroidissement est réalisé en utilisant un ou plusieurs éléments choisis parmi le groupe consistant en une housse de chauffage (705), couplée à un rouleau (200), un liquide de refroidissement (710), des tuyaux de radiateurs (725) et un ventilateur de refroidissement (720).

7. Procédé selon l'une des revendications précédentes, **caractérisé en ce qu'**il comporte une étape de grattage dudit du matériau en surplus (217) à partir de la surface de rouleau (207) en utilisant une lame (219).

8. Procédé selon la revendication 7, **caractérisé en ce que** ladite lame (219) inclue au moins un guide flexible (400) orienté pour diriger ledit matériau en surplus (217) s'écoulant le long de la lame (219) vers une zone de récupération (222) éloignée des bords de la lame (219).

9. Procédé selon la revendication 8, **caractérisé en ce que** ledit guide (400) est choisi parmi le groupe consistant en une barrière, un jeu de paroi de caoutchouc, ou un revêtement (510) ou substance repoussante.

10. Procédé selon l'une des revendications précédentes, comportant l'étape de transférer le matériau (217) en surplus vers un appareil d'évacuation de déchets (225).

11. Procédé selon l'une des revendications précédentes, **caractérisé en ce qu'**il comporte le fait de sécher ledit matériau (217).

12. Procédé selon l'une des revendications précédentes, **caractérisé en ce que** des collisions effectives ou potentielles, d'une partie dudit appareil d'impression avec du matériau séché (62) faisant saillie au-dessus du niveau opératoire dudit rouleau (200), sont détectées par un mécanisme (230), (155), et le fonctionnement de l'appareil d'impression est arrêté en option lorsqu'une collision potentielle ou réelle a été déterminée.

13. Procédé selon la revendication 12, **caractérisé en ce que** ledit mécanisme comporte un ou plusieurs capteurs (230), (155), choisi parmi le groupe comprenant des capteurs d'accélération et des capteurs de choc.

14. Procédé selon l'une des revendications précédentes, **caractérisé en ce que** le rouleau (200) présente une surface lisse (207).

15. Procédé selon l'une des revendications 1 à 13, **caractérisé en ce que** le rouleau (200) présente une surface poreuse (207), qui est imprégnée en option d'un matériau lubrifiant.

16. Procédé selon l'une des revendications précédentes, **caractérisé en ce que** le plateau d'impression (140) est abaissé dans une direction Z par rapport à l'appareil d'impression, entre les mouvements X en avant et en arrière de l'appareil d'impression.

100

135 — CAD SYSTEM

145 — PRINTER POSITIONER

155 — PROCESS CONTROLLER

130 — MATERIAL DISPENSER

125 — CURING UNIT

PRINTING HEAD — 105

110

115

150

OBJECT — 120

SUPPORT SURFACE — 140

FIG. 1

FIG. 2A

FIG. 2B

$R = Vr/Vo$

$td = tp / R$

FIG. 3A

FIG. 3B

FIG. 4

FIG. 5A

FIG. 5B

DEPOSITING A LAYER — 600

DETERMINING WHETHER A DEPOSITED LAYER EXCEEDS SELECTED THICKNESS PARAMETERS — 610

ACTIVATING A ROLLER AT A SELECTED HEIGHT TO REMOVE AT LEAST PORTIONS OF THE LAYER — 620

CURING THE LAYER — 630

DEPOSITING AT LEAST ONE ADDITIONAL LAYER — 640

FIG. 6

700

Roller

Cooling
liquid          710

Cooling
jacket

705

## FIG. 7A

730

Curer

Roller

710

725

Radiator
pipes

Cooling
fan

720

Objet

732

Support
structure

734

Tray

736

## FIG. 7B

DISPENSED LAYER   PRESSURE ROLLER   RESHAPED LAYER

Z ↑ → Y

## FIG. 8A

LAYER BEFORE PRESS   805

PRESSURE ROLLER   800

METAL CORE   820

SILICON RUBBER   815

LAYER AFTER PRESS   825

Z   X
→ Y

## FIG. 8B

925   920   925

932   934   936   910   900

## FIG. 9A

925   920   925

932   934
900   936   910

## FIG. 9B

**EP 1 674 243 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0153105 A
- US 6259962 B
- US 6658314 B
- US 6569373 B